# EUROPÄISCHE PATENTSCHRIFT

(11) **EP 4 339 106 B1**
(45) Veröffentlichungstag und Bekanntmachung des Hinweises auf die Patenterteilung: **11.11.2026**
(21) Anmeldenummer: 22195998.4
(22) Anmeldetag: 15.09.2022
(51) Int. Cl.: B64F 5/10, B62D 65/02

(54) **SYSTEM UND VERFAHREN ZUM POSITIONIEREN VON FAHRZEUGBAUTEILEN FÜR EINE MONTAGE**
SYSTEM AND METHOD FOR POSITIONING VEHICLE COMPONENTS FOR ASSEMBLY
SYSTÈME ET PROCÉDÉ DE POSITIONNEMENT DE COMPOSANTS DE VÉHICULE POUR UN MONTAGE

(43) Veröffentlichungstag der Anmeldung: 20.03.2024
(73) Patentinhaber: Airbus Operations GmbH, 21129 Hamburg (DE)
(72) Erfinder: Frankenberger, Eckart, 21129 Hamburg (DE)
(74) Vertreter: Airbus Germany

(56) Entgegenhaltungen:
- EP-A1- 3 604 141
- EP-A2- 2 824 439
- US-A1- 2009 112 349
- US-A1- 2010 320 327

## Beschreibung

### Technisches Gebiet

Die vorliegende Beschreibung betrifft ein System und Verfahren zum Positionieren mehrerer Fahrzeugbauteile relativ zueinander auf einem Boden zur Vorbereitung eines Zusammenbaus der Fahrzeugbauteile.

### Technischer Hintergrund

Bei der Montage von Komponenten eines Luftfahrzeugs werden üblicherweise Montagegestelle verwendet, die mit einer Indexierung versehen sind und daran befestigte Flugzeugbauteile auf Basis der Indexierung zueinander ausgerichtet werden. Die Präzision dieser Ausrichtung ist folglich abhängig von der Präzision des Gestells, was die Ausrüstung für einen Montagebauplatz sehr kostenintensiv macht und zudem besonders aufwändige Fundamente für eine stabile, ortsfeste Lagerung erfordert. Zudem sind regelmäßige Wartungen notwendig, um die notwendige Präzision stets gewährleisten zu können. Ein etwas modernerer Ansatz liegt in der Verwendung von bewegbaren Bearbeitungsplattformen, die jedoch die drei Funktionen des Lagerns, Bewegens und Positionierens relativ zu anderen Bauteilen durchführen können müssen. Dies führt zu höheren Kosten, da insbesondere die Bewegungsfunktion nur zum Verfahren zwischen den Stationen und die Positionierungsfunktionen nur direkt am Montageplatz notwendig sind und eine kostengünstige Lagerung der einzelnen Bauteile damit kaum möglich ist.

US 2009/112349 A1 beschreibt, laut der bei Espacenet verfügbaren Übersetzung, ein System, welches große Komponenten eines Fahrzeugs, beispielsweise eines Flugzeugs, automatisch in die endgültige Montageausrichtung bewegt. Ein berührungsloses Messsystem ermittelt an jedem Bauteil die Position aerodynamisch relevanter Merkmale. Die gemessenen Positionen der Komponenten werden zur Steuerung eines automatisierten Hebesystems verwendet, das Montageheber zum individuellen Bewegen der Komponenten in die Montageausrichtung umfasst. Es steht ein System zur Verfügung, mit dem sich die Reisekonfiguration des Fahrzeugs im Istzustand berechnen und in das Fahrzeug übertragen lässt, wo sie in Form eines physischen Dokuments aufgezeichnet wird.

US 2010/320327 A1 beschreibt, laut der bei Espacenet verfügbaren Übersetzung, ein Installationssystem umfassend eine Struktur für ein Flugzeug, mindestens einen Träger für eine Anordnung von mindestens einem Gerät des Flugzeugs, mindestens zwei Befestigungselemente, die dazu ausgebildet sind, den mindestens einen Träger an der Struktur zu befestigen, und mindestens eine Halterung mit einem verstellbaren Aufnahmeelement, das eines der mindestens zwei Befestigungselemente aufnimmt.

EP 2 824 439 A2 beschreibt, laut der bei Espacenet verfügbaren Übersetzung, ebenfalls eine mobile Vorrichtung, die zum Bewegen einer Struktur in einer Fertigungsumgebung konfiguriert ist.

EP 3 604 141 A1 beschreibt, laut der bei Espacenet verfügbaren Übersetzung, ebenfalls eine Vorrichtung zur Herstellung einer Flugzeugstruktur.

### Beschreibung

Eine Aufgabe der Erfindung liegt folglich darin, ein alternatives System vorzuschlagen, bei dem eine kostengünstige Lagerung, Bewegung und Ausrichtung von Fahrzeugbauteilen und insbesondere Luftfahrzeugbauteilen zur Vorbereitung der Montage möglich ist, ohne auf die geforderte Präzision zu verzichten.

Diese Aufgabe wird gelöst durch den Gegenstand des unabhängigen Anspruchs 1. Weitere Ausführungsformen ergeben sich aus den abhängigen Ansprüchen sowie aus der folgenden Beschreibung.

Es wird ein System zum Positionieren mehrerer Fahrzeugbauteile relativ zueinander auf einem Boden zur Vorbereitung eines Zusammenbaus der Fahrzeugbauteile vorgeschlagen, aufweisend mehrere Träger zum Aufnehmen jeweils eines Fahrzeugbauteils, mehrere Positioniertische, mit einem Unterteil und einem Oberteil, wobei das Unterteil an dem Boden fixierbar ist, und wobei das Oberteil dazu ausgebildet ist, einen Träger aufzunehmen, eine Lokalisierungseinrichtung mit mindestens einer Basis und mehreren relativ zu der mindestens einen Basis bewegbaren Mobileinheiten, mindestens eine Transporteinrichtung, und mindestens eine Positionssteuereinheit, wobei zumindest eine Teilmenge der Positioniertische dazu ausgebildet ist, ihr jeweiliges Oberteil entlang zumindest zweier Bewegungsachsen relativ zu dem jeweiligen Unterteil zu bewegen, um einen darauf befindlichen Träger zu positionieren, wobei die mindestens eine Transporteinrichtung dazu ausgebildet ist, die Träger aus einer externen Position an einen Positioniertisch heranzuführen und auf das Oberteil zu setzen, wobei die Lokalisierungseinrichtung dazu ausgebildet ist, die Positionen der jeweiligen Mobileinheiten relativ zu der mindestens einen Basis zu bestimmen, und wobei die Mobileinheiten an den Oberteilen der Positioniertische und/oder den Fahrzeugbauteilen angeordnet sind, wobei die Lokalisierungseinrichtung und die Positioniertische mit der mindestens einen Positionssteuereinheit gekoppelt sind, und wobei die mindestens eine Positionssteuereinheit dazu ausgebildet ist, eine Bewegung des jeweiligen Oberteils zu einer vorgegebenen Zielposition über dem Boden anzusteuern.

Das erfindungsgemäße System vereint mehrere Vorteile, die bei herkömmlichen Montageprozessen mit üblichen Einrichtungen insbesondere für größere Fahrzeuge nicht möglich sind. Ziel des Systems ist, eine einfach zu nutzende, kostengünstige und präzise Möglichkeit zu realisieren, Fahrzeugbauteile und insbesondere Bauteile für Verkehrsflugzeuge, zur Vorbereitung eines Zusammenbaus an einen Montageplatz zu bringen und dort exakt zu positionieren. Die Positionierung soll dabei so erfolgen, dass anschließend bevorzugt direkt eine Verbindung der Bauteile erfolgen kann oder nur sehr geringe manuelle Justage notwendig ist, wenn es der entsprechende Montageprozess erfordert. Hierzu sind im Wesentlichen drei Elemente vorgesehen, die unter Nutzung einer Lokalisierungseinrichtung zueinander bewegt werden können. Nachfolgend werden die einzelnen Teile näher beschrieben. Im Anschluss hieran werden vorteilhafte Varianten erläutert.

Die Träger sind als im Wesentlichen passive Einrichtungen zu verstehen, die nur mit einer separat dazu ausgeführten Transporteinrichtung bewegt werden können. Sie sind lediglich dazu ausgebildet, ein Fahrzeugbauteil zu tragen und hierbei auf dem Boden oder einer anderen Fläche zu stehen. Die Träger könnten als Paletten, Gestelle, Racks oder dergleichen ausgeführt sein. Es kann sich anbieten, hierfür bereits standardisierte Einrichtungen zu verwenden, beispielsweise Träger, die sonst üblicherweise zur temporären Lagerung von Fahrzeugbauteilen verwendet werden. Die Träger sind so ausgebildet, dass sie auf eine Oberseite eines oder mehrerer nachfolgend erläuterter Positioniertische platziert werden können, ohne dass die Fahrzeugbauteile von dem Träger entfernt werden müssen. Es ist damit möglich, eine temporäre Lagerung von Fahrzeugbauteilen mit sehr geringen Kosten zu realisieren, da die Träger keine weiteren Funktionen erfüllen müssen und als Standardkomponenten bereits verfügbar sind.

Die Träger weisen jeweils eine Trägerunterseite und eine Trägeroberseite auf. Die Trägerunterseite dient dazu, den Träger auf dem Boden oder einem Positioniertisch bzw. mehreren Positioniertischen zu platzieren. Die Trägeroberseite hingegen dient der Aufnahme des entsprechenden Fahrzeugbauteils. Es ist verständlich, dass die Trägeroberseite an das jeweilige Fahrzeugbauteil angepasst ist und beispielsweise eine separate, daran befestigte Einrichtung zum Aufnehmen und Haltern des betreffenden Fahrzeugbauteils aufweist, das individuell an das entsprechende Fahrzeugbauteil angepasst ist. Die Träger könnten an der Trägerunterseite direkt auf den oder die Positioniertische angepasst sein, sodass eine ortsfeste Lagerung des Trägers auf dem oder den Positioniertisch(en) möglich ist. Weitere Details hierzu werden weiter nachfolgend erläutert.

Es ist denkbar, dass nicht alle Träger dieselbe Größe aufweisen. Insbesondere könnten größere und kleinere Träger eingesetzt werden, die auf das betreffende Fahrzeugbauteil angepasst sind. Insbesondere bei größeren Bauteilen, wie Tragflügel, Rumpfsektionen oder dergleichen, könnte ein einzelner Träger entsprechend dimensioniert und auf mehrere Positioniertische gesetzt werden. Ein Positioniertisch ist eine Einrichtung, die aus zwei wesentlichen Abschnitten besteht und an dem Boden fixierbar ist. Er ist primär dazu vorgesehen, einen Träger oder einen Teil eines Trägers auf dem Oberteil aufzunehmen. Zumindest bei einer Teilmenge der Positioniertische kann durch Bewegen des Oberteils relativ zu dem Unterteil eine gewünschte Zielposition erreicht werden. Dafür weist der Positioniertisch eine entsprechende Mechanik auf, die es erlaubt, das Oberteil und das Unterteil relativ zueinander in mindestens zwei Raumrichtungen, die hier als Bewegungsachsen bezeichnet werden, zu bewegen. Es ist hierbei nicht notwendig, dass der Positioniertisch formschlüssig an dem Boden befestigt werden muss, sondern es könnte auch eine reib- oder kraftschlüssige Fixierung erfolgen. Wird ein Träger durch die Transporteinrichtung auf den Positioniertisch gesetzt, kann die genaue Position bzw. Ausrichtung des Trägers durch Bewegen des Oberteils des Positioniertischs justiert werden. Es versteht sich, dass neben einer rein linearen Bewegung auch eine rotatorische Bewegung um zumindest eine Achse denkbar ist, die vertikal zu dem Boden ausgerichtet ist. Es sind bereits standardisierte Positioniertisch-Mechaniken bekannt, welche in dem erfindungsgemäßen System eingesetzt sind. Es ist weiterhin in einem Beispiel, welches nicht unter den Schutzumfang der Ansprüche fällt, denkbar, einen oder mehrere Positioniertische unbeweglich zu gestalten und beispielsweise ein Fahrzeugbauteil auf unbeweglichen Positioniertischen zu platzieren, während die damit zu verbindenden Fahrzeugbauteile auf beweglichen Positioniertischen angeordnet werden.

Die mindestens eine Transporteinrichtung ist dazu vorgesehen, Träger zu einem Positioniertisch zu transportieren. Da die Träger erfindungsgemäß auch zur temporären Lagerung eingesetzt werden können, können sie sich für den Zweck dieser Aufgabe in einem anderen Raum befinden als der Montage- bzw. Bauplatz. Die mindestens eine Transporteinrichtung könnte daher bevorzugt dazu ausgebildet sein, auch größere Strecken zurückzulegen, die ein Vielfaches der Ausdehnung des entsprechenden Fahrzeugbauteils beinhalten könnten. Die Transporteinrichtung sollte hierbei möglichst kompakt und bevorzugt autark ausgeführt sein. Die mindestens eine Transporteinrichtung könnte etwa als ein standardisiertes, fahrerloses Transportfahrzeug (AGV, "automated guided vehicle") ausgeführt sein, das als mobiler Roboter verstanden werden kann. Diese Art von Transporteinrichtungen sind im industriellen Umfeld bekannt und dienen unter anderem dazu, Paletten oder andere Gegenstände automatisiert entlang von Bodenlinien oder gestützt durch eine andere Navigationshilfe auf dem Boden zu verfahren.

Die mindestens eine Positionssteuereinheit könnte eine übergeordnete Steuereinheit sein, welche in der Lage ist, Positionen von Oberteilen von Positioniertischen vorzugeben bzw. zu planen und gegebenenfalls umzusetzen. Die mindestens eine Positionssteuereinheit könnte auch als eine individuelle Steuereinheit in einem Positioniertisch ausgeführt oder mit einer solchen verbunden sein, um dort eine entsprechende Mechanik anzusteuern.

Die Lokalisierungseinrichtung dient zur Erfassung einer tatsächlichen Position einer bewegbaren Mobileinheit gegenüber mindestens einer räumlich fest positionierten Basis. Es ist besonders bevorzugt, mehrere voneinander beabstandete Basen bzw. Basisstationen zu verwenden, die gängige Triangulations- bzw. Trilaterationsverfahren durchführen zu können. Die Positionserfassung erfolgt ohne dedizierte Zielpunkte an den einzelnen Fahrzeugbauteilen und ist sehr flexibel auf unterschiedlichste Fahrzeugbauteile anwendbar.

Das erfindungsgemäße System erlaubt, sämtliche Bauteile auf kostengünstigen Standard-Racks oder anderen Trägern zu lagern. Dabei wird die volle Flexibilität der Träger für verschiedene Konfigurationen und sogar Größen von Komponenten, etwa Rumpfsektionsdurchmesser und -längen sowie Flügelgrößen, ermöglicht. Ein bevorzugt vollautomatischer Transport der Träger mit den darauf befindlichen Bauteilen durch beispielsweise bereits vorhandene, bevorzugt standardisierte Transporteinrichtungen erlaubt die rasche und einfache Bereitstellung eines Bauteils am Montageplatz mit einer bereits hohen Genauigkeit. Die anschließende Justage erfolgt mit ebenso standardisierten Positioniertischen, die ausschließlich an dem Montageplatz verwendet werden. Die Funktion der präzisen Justage ist demnach nicht auch in Trägern zur temporären Lagerung vorgesehen. Insgesamt können hierdurch der Aufwand und die Kosten deutlich reduziert werden. Die Montageprozesse können sehr flexibel und rasch geplant und umgesetzt werden, da die einzelnen Komponenten beliebig kombinierbar sind. Zudem kann durch Verwendung von standardisierten Komponenten eine hohe Kostenreduktion und zudem hohe Redundanz realisiert werden.

In einer vorteilhaften Ausführungsform weist das Oberteil ein erstes Aufnahmemittel auf, das komplementär zu einem zweiten Aufnahmemittel an dem Träger ausgebildet ist, wobei die Aufnahmemittel dazu ausgebildet sind, den betreffenden Träger ortsfest auf dem Oberteil zu fixieren. Das erste Aufnahmemittel könnte von dem Oberteil abstehen und als ein Vorsprung ausgebildet sein. Das zweite Aufnahmemittel könnte indes eine Vertiefung umfassen, die auf den Vorsprung aufsetzbar ist. Eine invertierte Gestaltung wäre ebenso denkbar, sollte das Oberteil einen ausreichenden Bauraum zur Bereitstellung einer solchen Vertiefung haben. Es ist bevorzugt, wenn sich die Aufnahmemittel selbstständig miteinander ausrichten. Dies kann durch eine Art Trichter- oder Führungsfunktion realisiert werden, sodass beim Aufsetzen des Trägers auf das Oberteil kleinere Positionsabweichungen des Trägers relativ zu dem Oberteil ausgeglichen werden. Es ist zudem besonders bevorzugt, wenn die Aufnahmemittel im zusammengesetzten Zustand spielfrei aneinander angeordnet sind, sodass Bewegungen des Oberteils direkt in Bewegungen des Trägers umgesetzt werden.

Es ist denkbar, das erste Aufnahmemittel und das zweite Aufnahmemittel derart auszuführen, dass beide Aufnahmemittel ortsfest zueinander platzierbar sind, jedoch eine Drehung relativ zueinander erlauben. Damit ist nicht notwendig, eine Rotation von Positioniertischen durchzuführen, sollte ihre Ausrichtung bzw. die Ausrichtung des ersten Aufnahmemittels, nicht mit der Ausrichtung des zweiten Aufnahmemittels beim Aufsetzen des Trägers auf den Positioniertisch übereinstimmen.

In einer vorteilhaften Ausführungsform weisen die Positioniertische an dem Unterteil eine Auflageschicht aus einem im Wesentlichen inkompressiblen, rutschfesten Material auf. Dadurch kann ein Verrutschen der Positioniertische zumindest weitgehend vermieden werden. Die Auflageschicht könnte etwa aus einem gummiartigen Material bestehen.

In einer vorteilhaften Ausführungsform weisen die Positioniertische mindestens einen Bodenanker auf, der zum Verankern des Positioniertischs aus dem Unterteil in eine entsprechend geformte Vertiefung in dem Boden ausfahrbar ist. Bevorzugt sind zwei derartige Bodenanker vorgesehen, sodass ein auf dem Boden platzierter Positioniertisch in entsprechenden Vertiefungen verankerbar ist. Es ist vorstellbar, Schienen mit mehreren, in einem Raster angeordneten Vertiefungen in dem Boden zu verwenden. Die Positioniertische könnten an den Montageplatz transportiert und dort in korrespondierenden Vertiefungen verankert werden. Durch die Bodenanker wird eine besonders gute Verankerung erreicht, sodass die Oberteile der Positioniertische präzise positionierbar sind.

In einer vorteilhaften Ausführungsform weisen die Positioniertische an einer Unterseite jeweils mindestens ein Eingriffsmittel zum Aufnehmen und Transportieren des Positioniertischs auf. Das Eingriffsmittel könnte als eine oder mehrere Ausnehmungen ausgeführt sein. Die Positioniertische könnten beliebig auf dem Boden platziert werden, indem ein Transportmittel, beispielsweise ein Gabelstapler, den betreffenden Positioniertisch an dem Eingriffsmittel an einer Stelle aufnimmt und an anderer Stelle wieder absetzt.

In einer vorteilhaften Ausführungsform sind die Positioniertische dazu ausgebildet, das Oberteil in drei Raumrichtungen gegenüber dem Unterteil zu bewegen. Folglich kann eine Justage der Position in Längs- Quer- und Hochrichtung erfolgen. Weiterhin könnte, falls gewünscht, auch eine Rotation des Oberteils um eine vertikale Achse ermöglicht werden.

In einer vorteilhaften Ausführungsform weisen die Positioniertische für jede Bewegungsachse eine Verstellmechanik auf, die einen Aktuator umfasst, wobei die Positioniertische jeweils eine Steuereinheit aufweisen, die mit dem jeweiligen Aktuator und der mindestens einen Positionssteuereinheit gekoppelt ist und die Aktuatoren zum Bewegen des Oberteils ansteuern. Die Positionssteuereinheit kann der Steuereinheit, die in dem Positioniertisch angeordnet ist, gezielt eine Positions- oder Bewegungsvorgabe übermitteln. Beispielsweise könnte die Positionssteuereinheit nach Erfassung der Istpositionen der mobilen Einheiten durch Vergleich mit gewünschten Zielpositionen entlang aller Bewegungsachsen eine notwendige Bewegungsstrecke ermitteln und an die Steuereinheit übertragen. Die Steuereinheit kann mit dieser Information die entsprechenden Aktuatoren ansteuern. Das Erreichen der Zielposition kann durch präzises Steuern der Aktuatoren und lokales Messen der Bewegung des Oberteils, beispielsweise durch entsprechende Sensoren, an der jeweiligen Verstellmechanik erfolgen. Alternativ oder zusätzlich kann hierzu auch die Lokalisierungseinrichtung verwendet werden.

In einer vorteilhaften Ausführungsform sind die Aktuatoren elektrische Aktuatoren, wobei die Positioniertische einen elektrischen Energiespeicher und/oder ein mit einem bodenseitigen Anschluss oder einem Versorgungskabel verbindbares Verbindungskabel aufweisen. Insbesondere mit einem elektrischen Energiespeicher sind die Positioniertische besonders autark und können nach einer entsprechenden Platzierung sehr leicht in Betrieb versetzt werden.

In einer vorteilhaften Ausführungsform ist die mindestens eine Positionssteuereinheit dazu ausgebildet, aus vorgegebenen Relativpositionen der Bauteile zueinander erforderliche Endpositionen der Positioniertische zu ermitteln und an die Positioniertische zu übertragen. Das Übertragen erfolgt insbesondere drahtlos, bevorzugt mittels üblicher Datenübertragungsverfahren. Dies erhöht zudem die Einfachheit und Flexibilität der erforderlichen Infrastruktur am Montageplatz.

In einer vorteilhaften Ausführungsform ist die Lokalisierungseinrichtung dazu ausgebildet, eine Relativposition eines Mobilteils zu der mindestens einen Basis durch Triangulation oder Trilateration unter Verwendung von Lichtsignalen oder elektromagnetischen Signalen zu ermitteln. Während die Triangulation auf der Vermessung dreier oder mehr Winkel basiert, beruht die Trilateration auf Entfernungsmessungen zu drei oder mehr Basisstationen.

In einer vorteilhaften Ausführungsform weisen die Träger eine Ausnehmung an ihrer Unterseite auf, wobei die mindestens eine Transporteinrichtung dazu ausgebildet ist, einen kompaktierten Zustand und einen ausgefahrenen Zustand einzunehmen, und wobei die Ausnehmung und die Transporteinrichtung komplementär zueinander dimensioniert sind, sodass die Transporteinrichtung in dem kompaktierten Zustand in die Ausnehmung einfahrbar ist und in dem ausgefahrenen Zustand den Träger zum Bewegen anhebt. Die Transporteinrichtung kann als ein übliches AGV realisiert sein, wie weiter vorangehend erwähnt.

In einer vorteilhaften Ausführungsform ist ein Teil der Positioniertische unbeweglich, um einen ersten Träger als Referenzträger auf den unbeweglichen Positioniertischen zu platzieren und zweite Träger relativ dazu auszurichten. Ein erstes Fahrzeugbauteil kann folglich zunächst auf dem Montageplatz angeordnet werden und alle weiteren, damit zu verbindenden Fahrzeugbauteile werden anschließend antransportiert und relativ zu dem bereits vorhandenen Fahrzeugbauteil ausgerichtet.

Die Erfindung betrifft analog dazu ein Verfahren zum Positionieren mehrerer Fahrzeugbauteile relativ zueinander auf einem Boden zur Vorbereitung eines Zusammenbaus der Fahrzeugbauteile, aufweisend die Schritte: Platzieren mehrerer Positioniertische auf einem Boden an einem Montageplatz, wobei die Positioniertische ein Unterteil und ein Oberteil aufweisen, wobei das Unterteil an dem Boden fixiert wird, Transportieren eines ersten Trägers und mindestens eines zweiten Trägers, wobei auf den Trägern jeweils ein Fahrzeugbauteil angeordnet ist, aus einer externen Position an den Montageplatz und Aufsetzen auf die Positioniertische, mittels mindestens einer Transporteinrichtung, und Bewegen der Oberteile zumindest einer Teilmenge der Positioniertische entlang zumindest zweier Bewegungsachsen relativ zu dem jeweiligen Unterteil, um einen darauf befindlichen Träger in eine Zielposition zu bringen, wobei zumindest beim Bewegen der Oberteile eine Positionserfassung der Oberteile und/oder der Träger mittels einer Lokalisierungseinrichtung erfolgt, die eine Basis und mehrere relativ zu der mindestens einen Basis bewegbare Mobileinheiten umfasst.

In einer vorteilhaften Ausführungsform bestimmt nach dem Aufsetzen der Träger auf die Positioniertische mindestens eine Positionssteuereinheit die Istpositionen aller Fahrzeugbauteile, vergleicht sie mit Zielpositionen, ermittelt zum Erreichen der Zielpositionen notwendige Bewegungen der Oberteile und überträgt sie an die Positioniertische.

In einer vorteilhaften Ausführungsform werden die Positioniertische nach dem Platzieren mittels einer Auflageschicht aus einem im Wesentlichen inkompressiblen, rutschfesten Material und/oder mittels eines verfahrbaren Bodenankers an dem Boden fixiert.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung eines Systems gemäß einem Ausführungsbeispiel.
- Fig. 2: eine schematische Darstellung eines Positioniertischs und eines Fußes eines Trägers.
- Fig. 3: eine schematische Darstellung zweier Träger mit Fahrzeugbauteilen und einer Transporteinrichtung zum Anheben eines der Träger.
- Fig. 4: eine schematische Darstellung eines Systems gemäß einem Ausführungsbeispiel.
- Fig. 5: eine schematische Darstellung einer Transporteinrichtung in zwei unterschiedlichen Zuständen.
- Fig. 6: eine schematische Draufsicht eines Positioniertischs.
- Fig. 7: eine schematische, blockbasierte Darstellung eines Verfahrens zum Positionieren mehrerer Fahrzeugbauteile.

### Detaillierte Beschreibung von Ausführungsbeispielen

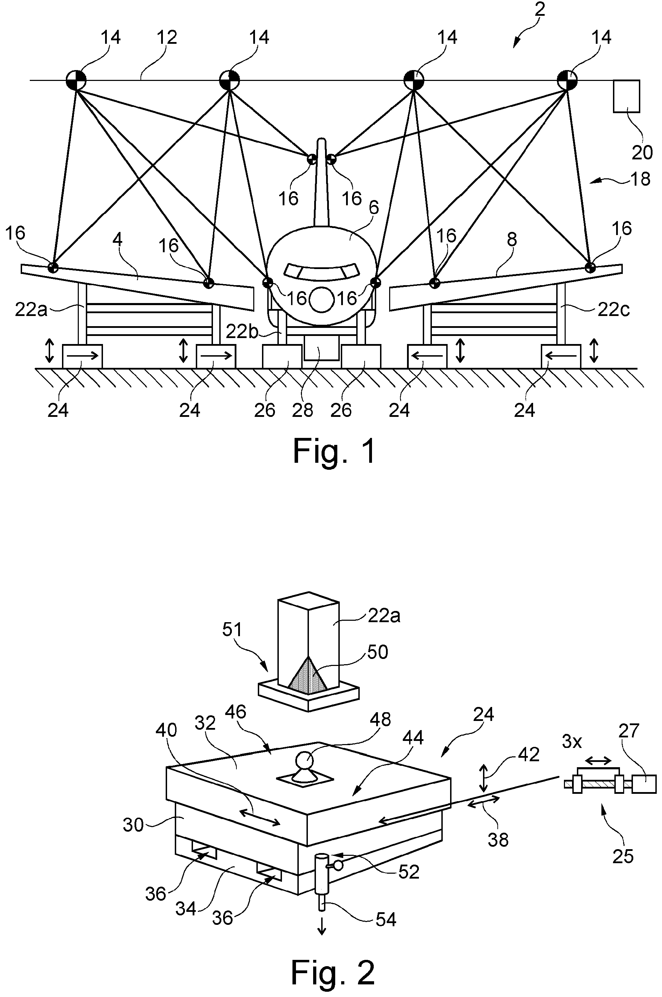

Fig. 1 zeigt ein System 2 zum Positionieren mehrerer Fahrzeugbauteile 4, 6 und 8 relativ zueinander auf einem Boden 10 zur Vorbereitung eines Zusammenbaus der Fahrzeugteile 4, 6, 8. Der Boden 10 könnte ein Boden in einer Industriehalle sein und die gezeigte Darstellung stellt schematisch einen Montageplatz dar, an dem die Fahrzeugbauteile 4, 6 und 8 zusammengesetzt werden. Beispielhaft sind die Fahrzeugbauteile 4, 6 und 8 als Bauteile eines Verkehrsflugzeugs ausgeführt, wobei die Bauteile 4 und 8 jeweils eine Flügelhälfte sind und das Bauteil 6 ein Flugzeugrumpf.

Die Halle weist eine Hallendecke 12 auf, die in dieser Darstellung beispielhaft parallel zu dem Boden 10 ausgerichtet ist. An der Hallendecke 12 sind mehrere Basisstationen 14 angeordnet, die zusammen mit mehreren hierzu bewegbaren Mobileinheiten 16 eine Lokalisierungseinrichtung 18 bilden. Die Basisstationen 14 sind ortsfest und voneinander beabstandet an der Hallendecke 12 angeordnet. Es versteht sich, dass die Basisstationen 14 auch an einem Gestell oder einem Rahmen angeordnet sein könnten, der von der Hallendecke 12 abgehängt ist oder auf einem hiervon unabhängigen Gerüst in der Industriehalle angeordnet sein könnten. Die Lokalisierungseinrichtung 18 ist dazu ausgebildet, die Positionen der Mobileinheiten 16 durch Triangulation oder Trilateration gegenüber den Basisstationen 14 zu bestimmen. Die Lokalisierungseinrichtung 18 könnte dabei als Innenraum-GPS bezeichnet werden. Es ist denkbar, dass die Lokalisierungseinrichtung 18 eine Positionssteuereinheit 20 aufweist oder damit verbunden ist, die dazu ausgebildet ist, eine Bewegung der Flügelhälften 4 und 8 gegenüber dem Flugzeugrumpf 6 zur exakten Positionierung anzusteuern. Dies wird weiter nachfolgend erläutert.

Die Bauteile 4, 6 und 8 sind jeweils auf einem Träger 22a, 22b und 22c angeordnet. Diese sind passive Einheiten, welche lediglich in Form eines Gestells, Racks oder einer Palette ausgeführt und lediglich dazu ausgebildet sind, die einzelnen Bauteile 4, 6 und 8 entsprechend zu halten. Sie sind hierfür individuell auf das jeweilige Bauteil 4, 6 und 8 angepasst.

Die Träger 22a, 22b und 22c sind in dieser Darstellung jeweils auf mehreren Positioniertischen 24 angeordnet. Diese sind dazu ausgebildet, eine Bewegung eines darauf befindlichen Objekts zumindest in zwei und bevorzugt drei Bewegungsachsen auszuführen. Beispielhaft ist der Träger 22b, der den Flugzeugrumpf 6 trägt, auf zwei festen Positioniertischen 26 angeordnet. Relativ hierzu sind die Positioniertische 24 bewegbar, um die Bauteile 4 und 8, d.h. die Flügelhälften, genau an dem Flugzeugrumpf 6 zu positionieren.

Die einzelnen Bauteile 4, 6 und 8 sind jeweils mit mehreren Mobileinheiten 16 ausgestattet, sodass dadurch die Lage und Ausrichtung der einzelnen Bauteile 4, 6 und 8 ermittelbar ist. Die Positionssteuereinheit 20, die die Positionsermittlung durchführt oder die ermittelten Positionen erhält, wird durch die bekannten Positionsdaten dazu befähigt, entsprechend notwendige Bewegungen der Bauteile 4 und 8 zu planen, um gewünschte Sollpositionen zu erreichen.

Wie weiter nachfolgend erläutert wird, sind die einzelnen Träger 22a, 22b und 22c durch Transporteinrichtungen 28 bewegbar. Die Träger 22a, 22b und 22c können zur dauerhaften oder temporären, kostengünstigen Lagerung der Bauteile 4, 6 und 8 abseits des Montageplatzes ohne die Positioniertische 24 bzw. 26 eingesetzt werden. Lediglich bei Bedarf können sie anschließend durch entsprechende Transporteinrichtungen 28 zu dem Montageplatz und dort zu den einzelnen Positioniertischen 24 bzw. 26 geführt werden.

Fig. 2 zeigt eine mögliche Ausführungsform eines Positioniertischs 24. Der Positioniertisch 24 weist ein Unterteil 30 und ein Oberteil 32 auf, wobei das Oberteil 32 relativ zu dem Unterteil 30 bewegbar ist. Das Unterteil 30 ist hier beispielhaft mithilfe einer rutschfesten Auflageschicht 34 ausgestattet, die im Wesentlichen inkompressibel ist und ein rutschfestes Abstellen des Positioniertischs 24 auf dem Boden 10 erlaubt.

Der Positioniertisch 24 kann weiterhin flexibel auf dem Boden 10 platziert werden. Hierfür weist beispielhaft die rutschfeste Auflageschicht 34 Ausnehmungen 36 auf, die ein Aufnehmen durch einen Gabelstapler oder ähnliches ermöglichen. Der Positioniertisch 24 kann damit auf dem Boden 10 mithilfe eines Gabelstaplers positioniert werden, um anschließend dort einen Träger 22a, 22b oder 22c aufzunehmen. Im Innern des Positioniertischs 24 sind beispielhaft drei Verstellmechaniken 25 angeordnet, die ein Verstellen entlang dreier Bewegungsachsen 38, 40 und 42 erlauben. Die Verstellmechaniken 25 könnten etwa als Spindelgetriebe realisiert werden, die jeweils mit einem elektrischem Aktuator 27 verbunden sind. An einer Oberseite 44 des Oberteils 32 ist ein erstes Aufnahmemittel 46 angeordnet, das beispielhaft eine Kugel 48 aufweist. Diese ist dazu vorgesehen, eine zentrierte, spiellose Aufnahme eines zweiten Aufnahmemittels 50 durchzuführen, welche beispielhaft in Form eines Innenkegels ausgebildet ist. Das zweite Aufnahmemittel 50 ist exemplarisch an einem Fuß 51 des Trägers 22a angeordnet.

An dem Unterteil 30 ist beispielhaft ein Bodenanker 52 vorgesehen, der einen Verankerungsstab 54 umfasst, welcher in vertikaler Richtung aus dem Unterteil 30 in Richtung des Bodens 10 ausfahrbar oder in das Unterteil 30 einfahrbar ist. Der Positioniertisch 24 weist bevorzugt mindestens zwei dieser Bodenanker 52 auf, um eine verdreh- und ortsfeste Fixierung des Unterteils 30 des Positioniertischs 24 an dem Boden 10 zu ermöglichen.

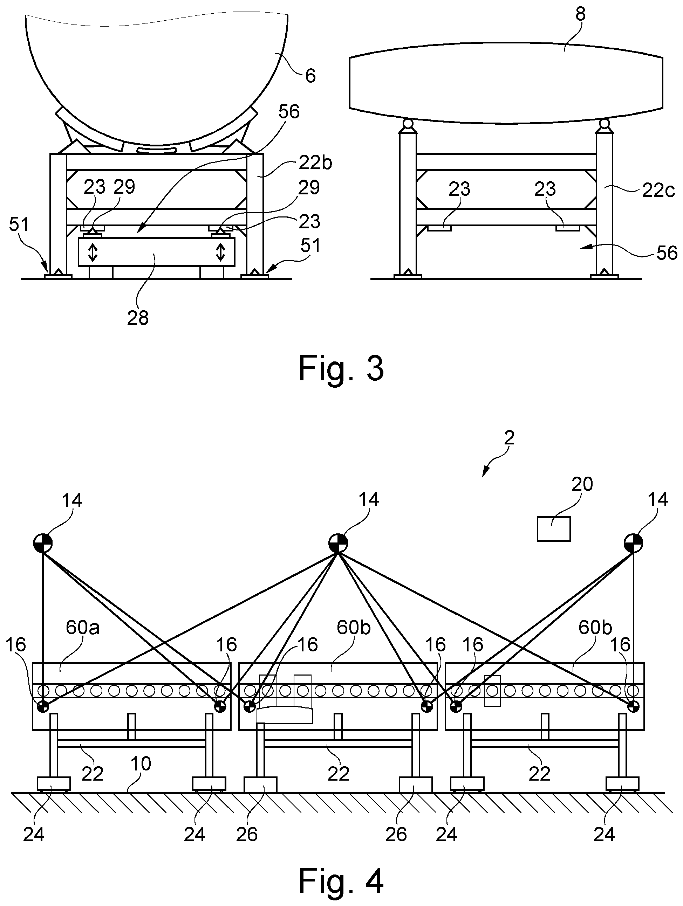

Eine Transporteinrichtung 28 kann folglich einen der Träger 22a, 22b und 22c aufnehmen, zu den entsprechenden Positioniertischen 24 bzw. 26 verfahren und dort absetzen. Dies wird beispielhaft anhand von Fig. 3 dargestellt. Hier sind die Gestelle 22b und 22c zur temporären Lagerung der Bauteile 6 und 8 angeordnet und die Transporteinrichtung 28 befindet sich in einer Ausnehmung 56 an einer Unterseite 58 des Trägers 22b. Dies kann durch Verfahren der Transporteinrichtung 28 auf dem Boden 10 erfolgen.

Hierfür ist die Transporteinrichtung 28 dazu ausgebildet, in einen eingefahrenen Zustand - der hier in Fig. 3 gezeigt ist - und in einen ausgefahrenen Zustand mit größerer Höhe gebracht zu werden. In der Darstellung aus Fig. 3 weist die Transporteinrichtung 28 in vertikaler Richtung eine möglichst geringe Höhe auf und ist in der Ausnehmung 56 platziert. Durch anschließendes Verfahren in den ausgefahrenen Zustand durch Anheben von Trageflächen 29 kann die Transporteinrichtung 28 einen bündigen Kontakt mit korrespondierenden Kontaktflächen 23 des Trägers 22b eingehen. Dadurch wird der Träger 22b vom Boden 10 abgehoben, d.h. die Füße 51 des Trägers 22b berühren den Boden 10 nicht mehr. In diesem ausgefahrenen Zustand kann die Transporteinrichtung 28 den Träger 22b beliebig verfahren, z.B. auf geeignete Positioniertische 24 bzw. 26.

Das System 2 kann völlig beliebig auf unterschiedliche Bauteile angewandt werden, wobei sich hierzu insbesondere großformatige Bauteile anbieten. Fig. 4 zeigt beispielhaft die Verwendung des Systems 2 für die Montage mehrerer Rumpfabschnitte 60a, 60b und 60c, die in axialer Richtung zueinander positioniert werden, um anschließend ihre Verbindung durchführen zu können.

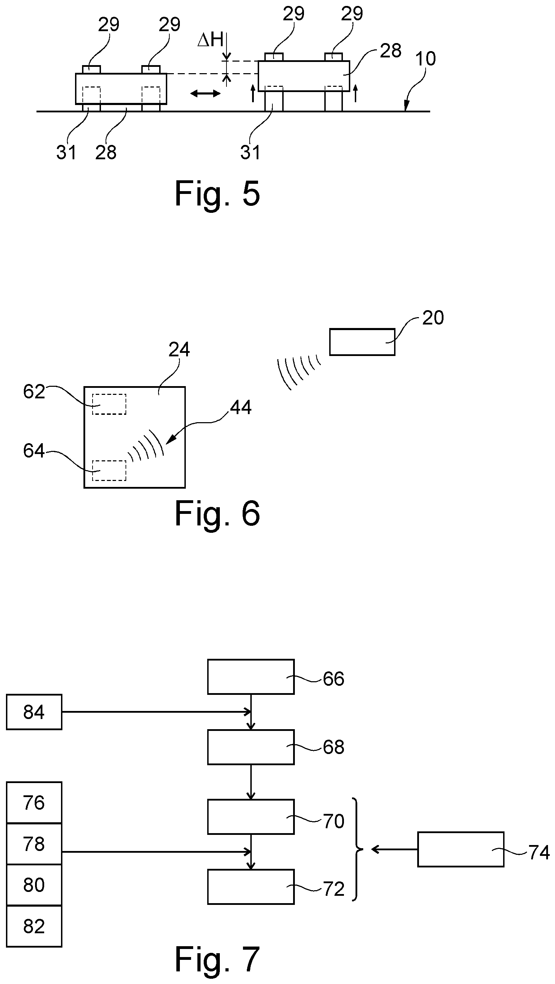

Fig. 5 zeigt eine schematische Seitenansichten der Transporteinrichtung 28, die an ihrer Unterseite Räder 31 zum Aufstehen und Abrollen auf dem Boden 10 aufweist. Auf der linken Seite befindet sich die Transporteinrichtung 28 in einem kompaktierten Zustand, während sie sich auf der rechten Seite in einem ausgefahrenen Zustand befindet. Dieser kann beispielsweise durch Anheben eines Rahmens der Transporteinrichtung 28 erfolgen, sodass sich der Abstand zwischen der Trageflächen 29 und dem Boden 10 bedarfsweise erhöhen lässt.

Eine realisierbare Anhebestrecke ΔH kann entsprechend der möglichen Träger 22 realisiert werden.

Fig. 6 zeigt eine Draufsicht auf einen Positioniertisch 24. Schematisch ist dargestellt, dass der Positioniertisch 24 beispielhaft einen elektrischen Energiespeicher 62 besitzt, der mit einer Steuereinheit 64 gekoppelt ist. Die Steuereinheit 64 kann mit den elektrischen Aktuatoren 27 verbunden sein, um diese direkt anzusteuern, sodass der Positioniertisch 24 das Oberteil 32 entsprechend bewegen kann. Die Positionssteuereinheit 20 ist exemplarisch über eine drahtlose Datenverbindung mit der Steuereinheit 64 verbunden. Nach dem Aufsetzen der Träger 22 auf alle betreffenden Positioniertische 24 kann die Positionssteuereinheit 20 die Istpositionen aller Fahrzeugbauteile 4, 6, 8, 60 bestimmen, mit Zielpositionen vergleichen, zum Erreichen der Zielpositionen notwendige Bewegungen der Oberteile 32 ermitteln und an die Positioniertische 24 bzw. die darin enthaltene Steuereinheit 64 übertragen. Daraufhin kann die Steuereinheit 64 die jeweils notwendige Bewegung umsetzen. Hierbei kann kontinuierlich die Istposition des betreffenden Fahrzeugbauteils 4, 6, 8, 60 erfasst werden, bis diese schließlich mit der gewünschten Zielposition zusammenfällt.

Schließlich zeigt Fig. 7 eine schematische Darstellung des Verfahrens zum Positionieren der Fahrzeugbauteile 4, 6, 8, 60 relativ zueinander auf dem Boden 10 zur Vorbereitung eines Zusammenbaus der Fahrzeugbauteile 4, 6, 8, 60. Das Verfahren weist beispielhaft die Schritte des Platzierens 66 mehrerer Positioniertische 24, 26 auf dem Boden 10 an einem Montageplatz auf, wobei das Unterteil 32 an dem Boden 10 fixiert wird. Anschließend oder gleichzeitig wird ein erster Träger 22 und mindestens ein zweiter Träger 22, wobei auf den Trägern 22 jeweils ein Fahrzeugbauteil 4, 6, 8, 60 angeordnet ist, aus einer externen Position an den Montageplatz transportiert 68 und auf die Positioniertische 24, 26 aufgesetzt 70. Dies erfolgt mittels mindestens einer Transporteinrichtung 28. Die Oberteile 32 zumindest einer Teilmenge der Positioniertische 24, 26 werden entlang zumindest zweier Bewegungsachsen 38, 40, 42 relativ zu dem jeweiligen Unterteil 30 bewegt 72, um einen darauf befindlichen Träger 22 in eine Zielposition zu bringen. Zumindest beim Bewegen der Oberteile 32 erfolgt eine Positionserfassung 74 der Oberteile 32 und/oder der Träger 22 mittels der Lokalisierungseinrichtung 18.

Nach dem Aufsetzen 70 der Träger 22 auf die Positioniertische 24, 26 ermittelt 76 mindestens eine Positionssteuereinheit 20 die Istpositionen aller Fahrzeugbauteile 4, 6, 8, 60, vergleicht 78 sie mit Zielpositionen, ermittelt 80 zum Erreichen der Zielpositionen notwendige Bewegungen der Oberteile 32 und überträgt 82 diese an die Positioniertische 24, 26. Weiterhin können die Positioniertische 24, 26 nach dem Platzieren 66 mittels der Auflageschicht 34 aus einem im Wesentlichen inkompressiblen, rutschfesten Material und/oder mittels des verfahrbaren Bodenankers 52 an dem Boden 10 fixiert werden 84.

### Bezugszeichenliste

- 2: System
- 4: Bauteil (Flügelhälfte)
- 6: Bauteil (Rumpf)
- 8: Bauteil (Flügelhälfte)
- 10: Boden
- 12: Hallendecke
- 14: Basis / Basisstation
- 16: Mobileinheit
- 18: Lokalisierungseinrichtung
- 20: Positionssteuereinheit
- 22, 22a, 22b, 22c: Träger
- 23: Kontaktfläche
- 24: Positioniertisch
- 25: Verstellmechanik
- 26: Positioniertisch (fest)
- 27: Aktuator
- 28: Transporteinrichtung
- 29: Tragefläche
- 30: Unterteil
- 31: Rad
- 32: Oberteil
- 34: Auflageschicht
- 36: Ausnehmung
- 38: Bewegungsachse
- 40: Bewegungsachse
- 42: Bewegungsachse
- 44: Oberseite
- 46: erstes Aufnahmemittel
- 48: Kugel
- 50: zweites Aufnahmemittel
- 51: Fuß
- 52: Bodenanker
- 54: Verankerungsstab
- 56: Ausnehmung
- 58: Unterseite
- 60a, 60b, 60c: Rumpfabschnitt
- 62: elektrischer Energiespeicher
- 64: Steuereinheit
- 66: Platzieren Positioniertisch
- 68: Transportieren Träger
- 70: Aufsetzen Träger
- 72: Bewegen Oberteil
- 74: Positionserfassung
- 76: Ermitteln Istpositionen
- 78: Vergleichen mit Zielpositionen
- 80: Ermitteln notwendiger Bewegungen
- 82: Übertragen
- 84: Fixieren

- ΔH: Anhebestrecke

## Patentansprüche

1. System (2) zum Positionieren mehrerer Fahrzeugbauteile (4, 6, 8, 60) relativ zueinander auf einem Boden (10) zur Vorbereitung eines Zusammenbaus der Fahrzeugbauteile (4, 6, 8, 60), aufweisend:
- mehrere Träger (22) zum Aufnehmen jeweils eines Fahrzeugbauteils (4, 6, 8, 60),
- mehrere Positioniertische (24, 26), mit einem Unterteil (30) und einem Oberteil (32), wobei das Unterteil (30) an dem Boden (10) fixierbar ist, und wobei das Oberteil (32) dazu ausgebildet ist, einen Träger (22) aufzunehmen,
- eine Lokalisierungseinrichtung (18) mit mindestens einer Basis (14) und mehreren relativ zu der mindestens einen Basis (14) bewegbaren Mobileinheiten (16),
- mindestens eine Transporteinrichtung (28), und
- mindestens eine Positionssteuereinheit (20),
wobei zumindest eine Teilmenge der Positioniertische (24, 26) dazu ausgebildet ist, ihr jeweiliges Oberteil (32) entlang zumindest zweier Bewegungsachsen (38, 40, 42) relativ zu dem jeweiligen Unterteil (30) zu bewegen, um einen darauf befindlichen Träger (22) zu positionieren,
wobei die mindestens eine Transporteinrichtung (28) dazu ausgebildet ist, die Träger (22) aus einer externen Position an einen Positioniertisch (24, 26) heranzuführen und auf das Oberteil (32) zu setzen,
wobei die Lokalisierungseinrichtung (18) dazu ausgebildet ist, die Positionen der jeweiligen Mobileinheiten (16) relativ zu der mindestens einen Basis (14) zu bestimmen, und
wobei die Mobileinheiten (16) an den Oberteilen (32) der Positioniertische (24, 26) und/oder den Fahrzeugbauteilen (4, 6, 8, 60) angeordnet sind, wobei die Lokalisierungseinrichtung (18) und die Positioniertische (24, 26) mit der mindestens einen Positionssteuereinheit (20) gekoppelt sind, und wobei die mindestens eine Positionssteuereinheit (20) dazu ausgebildet ist, eine Bewegung des jeweiligen Oberteils (32) zu einer vorgegebenen Zielposition über dem Boden (10) anzusteuern;
wobei der Träger (22) konfiguriert ist das Fahrzeugbauteil (4, 6, 8, 60) zu tragen und hierbei auf dem Boden (10) oder einer anderen Fläche zu stehen; wobei der Träger (22) jeweils eine Trägerunterseite und eine Trägeroberseite aufweist;
wobei die Trägerunterseite konfiguriert ist, den Träger (22) auf dem Boden (10) oder auf mehreren Positioniertischen (24, 26) zu platzieren;
wobei die Trägeroberseite an das Fahrzeugbauteil (4, 6, 8, 60) angepasst ist und eine separate, daran befestigte Einrichtung zum Aufnehmen und Halten des betreffenden Fahrzeugbauteils aufweist, das individuell an das Fahrzeugbauteil (4, 6, 8, 60) angepasst ist;
wobei die mehreren Positioniertische (24, 26) als standardisierte Positioniertische konfiguriert sind, die eine standardisierte Positioniertischmechanik aufweisen; und
wobei die mehreren Positioniertische (24) flexibel auf dem Boden (10) platzierbar sind.

2. System (2) nach Anspruch 1,
wobei das Oberteil (32) ein erstes Aufnahmemittel (46) aufweist, das komplementär zu einem zweiten Aufnahmemittel (50) an dem Träger (22) ausgebildet ist, und
wobei die Aufnahmemittel (46, 50) dazu ausgebildet sind, den betreffenden Träger (22) ortsfest auf dem Oberteil (32) zu fixieren.

3. System (2) nach Anspruch 1 oder 2,
wobei die Positioniertische (24, 26) an dem Unterteil (30) eine Auflageschicht (34) aus einem im Wesentlichen inkompressiblen, rutschfesten Material aufweisen.

4. System (2) nach einem der vorhergehenden Ansprüche,
wobei die Positioniertische (24, 26) mindestens einen Bodenanker (52) aufweisen, der zum Verankern des Positioniertischs (24, 26) aus dem Unterteil (30) in eine entsprechend geformte Vertiefung in dem Boden (10) ausfahrbar ist.

5. System (2) nach einem der vorhergehenden Ansprüche,
wobei die Positioniertische (24, 26) jeweils mindestens ein Eingriffsmittel (36) zum Aufnehmen und Transportieren des Positioniertischs (24, 26) aufweisen.

6. System (2) nach einem der vorhergehenden Ansprüche,
wobei die Positioniertische (24, 26) dazu ausgebildet sind, das Oberteil (32) in drei Raumrichtungen gegenüber dem Unterteil (30) zu bewegen.

7. System (2) nach einem der vorhergehenden Ansprüche,
wobei die Positioniertische (24, 26) für jede Bewegungsachse (38, 40, 42) eine Verstellmechanik (25) aufweisen, die einen Aktuator (27) umfasst, und
wobei die Positioniertische (24, 26) jeweils eine Steuereinheit (64) aufweisen, die mit dem jeweiligen Aktuator (27) und der mindestens einen Positionssteuereinheit (20) gekoppelt ist und die Aktuatoren (27) zum Bewegen des Oberteils (32) ansteuern.

8. System (2) nach Anspruch 7,
wobei die Aktuatoren (27) elektrische Aktuatoren (27) sind, und
wobei die Positioniertische (24, 26) einen elektrischen Energiespeicher (62) und/oder ein mit einem bodenseitigen Anschluss oder einem Versorgungskabel verbindbares Verbindungskabel aufweisen.

9. System (2) nach einem der vorhergehenden Ansprüche,
wobei die mindestens eine Positionssteuereinheit (20) dazu ausgebildet ist, aus vorgegebenen Relativpositionen der Bauteile (4, 6, 8, 60) zueinander erforderliche Endpositionen der Positioniertische (24, 26) zu ermitteln und an die Positioniertische (24, 26) zu übertragen.

10. System (2) nach einem der vorhergehenden Ansprüche,
wobei die Lokalisierungseinrichtung (18) dazu ausgebildet ist, eine Relativposition eines Mobilteils (16) zu der mindestens einen Basis (14) durch Triangulation oder Trilateration unter Verwendung von Lichtsignalen oder elektromagnetischen Signalen zu ermitteln.

11. System (2) nach einem der vorhergehenden Ansprüche,
wobei die Träger (22) eine Ausnehmung (56) an ihrer Unterseite (58) aufweisen,
wobei die mindestens eine Transporteinrichtung (28) dazu ausgebildet ist, einen kompaktierten Zustand und einen ausgefahrenen Zustand einzunehmen, und
wobei die Ausnehmung (56) und die Transporteinrichtung (28) komplementär zueinander dimensioniert sind, sodass die Transporteinrichtung (28) in dem kompaktierten Zustand in die Ausnehmung (56) einfahrbar ist und in dem ausgefahrenen Zustand den Träger (22) zum Bewegen anhebt.

12. System (2) nach einem der vorhergehenden Ansprüche,
wobei ein Teil der Positioniertische (24, 26) unbeweglich ist, um einen ersten Träger (22) als Referenzträger auf den unbeweglichen Positioniertischen (26) zu platzieren und zweite Träger (22) relativ dazu auszurichten.

13. Verfahren zum Positionieren mehrerer Fahrzeugbauteile (4, 6, 8, 60) relativ zueinander auf einem Boden (10) zur Vorbereitung eines Zusammenbaus der Fahrzeugbauteile (4, 6, 8, 60), aufweisend die Schritte:
- Platzieren (66) mehrerer Positioniertische (24, 26) auf einem Boden (10) an einem Montageplatz, wobei die Positioniertische ein Unterteil (30) und ein Oberteil (32) aufweisen, wobei das Unterteil (32) an dem Boden (10) fixiert wird,
- Transportieren (68) eines ersten Trägers (22) und mindestens eines zweiten Trägers (22), wobei auf den Trägern (22) jeweils ein Fahrzeugbauteil (4, 6, 8, 60) angeordnet ist, aus einer externen Position an den Montageplatz und Aufsetzen (70) auf die Positioniertische (24, 26), mittels mindestens einer Transporteinrichtung (28),
- Bewegen (72) der Oberteile (32) zumindest einer Teilmenge der Positioniertische (24, 26) entlang zumindest zweier Bewegungsachsen (38, 40, 42) relativ zu dem jeweiligen Unterteil (30), um einen darauf befindlichen Träger (22) in eine Zielposition zu bringen,
wobei zumindest beim Bewegen (72) der Oberteile (32) eine Positionserfassung (74) der Oberteile (32) und/oder der Träger (22) mittels einer Lokalisierungseinrichtung (18) erfolgt, die eine Basis (14) und mehrere relativ zu der mindestens einen Basis (14) bewegbare Mobileinheiten (16) umfasst;
wobei der Träger (22) konfiguriert ist das Fahrzeugbauteil (4, 6, 8, 60) zu tragen und hierbei auf dem Boden (10) oder einer anderen Fläche zu stehen;
wobei der Träger (22) jeweils eine Trägerunterseite und eine Trägeroberseite aufweist;
wobei die Trägerunterseite konfiguriert ist, den Träger (22) auf dem Boden (10) oder auf mehreren Positioniertischen (24, 26) zu platzieren;
wobei die Trägeroberseite an das Fahrzeugbauteil (4, 6, 8, 60) angepasst ist und eine separate, daran befestigte Einrichtung zum Aufnehmen und Halten des betreffenden Fahrzeugbauteils aufweist, das individuell an das Fahrzeugbauteil (4, 6, 8, 60) angepasst ist;
wobei die mehreren Positioniertische (24, 26) als standardisierte Positioniertische konfiguriert sind, die eine standardisierte Positioniertischmechanik aufweisen, und
wobei die mehreren Positioniertische (24) flexibel auf dem Boden (10) platzierbar sind.

14. Verfahren nach Anspruch 13,
wobei nach dem Aufsetzen (70) der Träger (22) auf die Positioniertische (24, 26) mindestens eine Positionssteuereinheit (20) die Istpositionen aller Fahrzeugbauteile (4, 6, 8, 60) bestimmt (76), mit Zielpositionen vergleicht (78), zum Erreichen der Zielpositionen notwendige Bewegungen der Oberteile (32) ermittelt (80) und an die Positioniertische (24, 26) überträgt (82).

15. Verfahren nach Anspruch 13 oder 14,
wobei die Positioniertische (24, 26) nach dem Platzieren (66) mittels einer Auflageschicht (34) aus einem im Wesentlichen inkompressiblen, rutschfesten Material und/oder mittels eines verfahrbaren Bodenankers (52) den Positioniertisch (24, 26) an dem Boden (10) fixiert werden (84).

## Claims

1. A system (2) for positioning a plurality of vehicle components (4, 6, 8, 60) relative to one another on a floor (10) in preparation for assembly of the vehicle components (4, 6, 8, 60), comprising:
- a plurality of carriers (22) for each receiving one vehicle component (4, 6, 8, 60),
- a plurality of positioning tables (24, 26), with a lower part (30) and an upper part (32), wherein the lower part (30) is fixable to the floor (10), and wherein the upper part (32) is configured to receive a carrier (22),
- a localization device (18) with at least one base (14) and a plurality of mobile units (16) movable relative to the at least one base (14),
- at least one transport device (28), and
- at least one position control unit (20),
wherein at least a subset of the positioning tables (24, 26) is configured to move their respective upper part (32) along at least two axes of movement (38, 40, 42) relative to the respective lower part (30) in order to position a carrier (22) located thereon,
wherein the at least one transport device (28) is configured to bring the carriers (22) from an external position to a positioning table (24, 26) and place them onto the upper part (32),
wherein the localization device (18) is configured to determine the positions of the respective mobile units (16) relative to the at least one base (14), and wherein the mobile units (16) are arranged on the upper parts (32) of the positioning tables (24, 26) and/or the vehicle components (4, 6, 8, 60), wherein the localization device (18) and the positioning tables (24, 26) are coupled to the at least one position control unit (20), and wherein the at least one position control unit (20) is configured to control a movement of the respective upper part (32) to a predetermined target position above the floor (10);
wherein the carrier (22) is configured to carry the vehicle component (4, 6, 8, 60) and thereby stand on the floor (10) or another surface;
wherein the carrier (22) each has a carrier underside and a carrier upperside; wherein the carrier underside is configured to place the carrier (22) on the floor (10) or on a plurality of positioning tables (24, 26);
wherein the carrier upperside is adapted to the vehicle component (4, 6, 8, 60) and has a separate device attached thereto for receiving and holding the relevant vehicle component, which is individually adapted to the vehicle component (4, 6, 8, 60);
wherein the plurality of positioning tables (24, 26) are configured as standardized positioning tables having a standardized positioning table mechanism; and
wherein the plurality of positioning tables (24) can be flexibly placed on the floor (10).

2. The system (2) according to claim 1, wherein the upper part (32) has a first receiving means (46) configured to be complementary to a second receiving means (50) on the carrier (22), and wherein the receiving means (46, 50) are configured to fix the relevant carrier (22) stationarily on the upper part (32).

3. The system (2) according to claim 1 or 2, wherein the positioning tables (24, 26) have on the lower part (30) a contact layer (34) made of a substantially incompressible, non-slip material.

4. The system (2) according to one of the preceding claims, wherein the positioning tables (24, 26) have at least one floor anchor (52) which is extendable from the lower part (30) into a correspondingly shaped recess in the floor (10) for anchoring the positioning table (24, 26).

5. The system (2) according to one of the preceding claims, wherein the positioning tables (24, 26) each have at least one engagement means (36) for receiving and transporting the positioning table (24, 26).

6. The system (2) according to one of the preceding claims, wherein the positioning tables (24, 26) are configured to move the upper part (32) in three spatial directions relative to the lower part (30).

7. The system (2) according to one of the preceding claims, wherein the positioning tables (24, 26) have an adjustment mechanism (25) for each axis of movement (38, 40, 42), which comprises an actuator (27), and wherein the positioning tables (24, 26) each have a control unit (64) which is coupled to the respective actuator (27) and the at least one position control unit (20) and which controls the actuators (27) to move the upper part (32).

8. The system (2) according to claim 7, wherein the actuators (27) are electrical actuators (27), and wherein the positioning tables (24, 26) have an electrical energy storage device (62) and/or a connection cable connectable to a floor-side connection or a supply cable.

9. The system (2) according to one of the preceding claims, wherein the at least one position control unit (20) is configured to determine necessary final positions of the positioning tables (24, 26) from predetermined relative positions of the components (4, 6, 8, 60) to one another and to transmit them to the positioning tables (24, 26).

10. The system (2) according to one of the preceding claims, wherein the localization device (18) is configured to determine a relative position of a mobile unit (16) to the at least one base (14) by triangulation or trilateration using light signals or electromagnetic signals.

11. The system (2) according to one of the preceding claims, wherein the carriers (22) have a recess (56) on their underside (58), wherein the at least one transport device (28) is configured to assume a compacted state and an extended state, and wherein the recess (56) and the transport device (28) are dimensioned to be complementary to one another, so that the transport device (28) can be retracted into the recess (56) in the compacted state and raises the carrier (22) for movement in the extended state.

12. The system (2) according to one of the preceding claims, wherein a portion of the positioning tables (24, 26) is immovable in order to place a first carrier (22) as a reference carrier on the immovable positioning tables (26) and to align second carriers (22) relative thereto.

13. A method for positioning a plurality of vehicle components (4, 6, 8, 60) relative to one another on a floor (10) in preparation for assembly of the vehicle components (4, 6, 8, 60), comprising the steps:
- placing (66) a plurality of positioning tables (24, 26) on a floor (10) at an assembly site, wherein the positioning tables have a lower part (30) and an upper part (32), wherein the lower part (32) is fixed to the floor (10),
- transporting (68) a first carrier (22) and at least one second carrier (22), wherein a vehicle component (4, 6, 8, 60) is respectively arranged on the carriers (22), from an external position to the assembly site and placing (70) them onto the positioning tables (24, 26) by means of at least one transport device (28),
- moving (72) the upper parts (32) of at least a subset of the positioning tables (24, 26) along at least two axes of movement (38, 40, 42) relative to the respective lower part (30) in order to bring a carrier (22) located thereon into a target position,
wherein at least during the moving (72) of the upper parts (32), a position detection (74) of the upper parts (32) and/or the carriers (22) takes place by means of a localization device (18) which comprises a base (14) and a plurality of mobile units (16) movable relative to the at least one base (14); wherein the carrier (22) is configured to carry the vehicle component (4, 6, 8, 60) and thereby stand on the floor (10) or another surface;
wherein the carrier (22) each has a carrier underside and a carrier upperside; wherein the carrier underside is configured to place the carrier (22) on the floor (10) or on a plurality of positioning tables (24, 26);
wherein the carrier upperside is adapted to the vehicle component (4, 6, 8, 60) and has a separate device attached thereto for receiving and holding the relevant vehicle component, which is individually adapted to the vehicle component (4, 6, 8, 60);
wherein the plurality of positioning tables (24, 26) are configured as standardized positioning tables having a standardized positioning table mechanism;
and wherein the plurality of positioning tables (24) can be flexibly placed on the floor (10).

14. The method according to claim 13, wherein after the placing (70) of the carriers (22) onto the positioning tables (24, 26), at least one position control unit (20) determines (76) the actual positions of all vehicle components (4, 6, 8, 60), compares (78) them with target positions, determines (80) movements of the upper parts (32) necessary to reach the target positions, and transmits (82) them to the positioning tables (24, 26).

15. The method according to claim 13 or 14, wherein after the placing (66), the positioning tables (24, 26) are fixed (84) to the floor (10) by means of a contact layer (34) made of a substantially incompressible, non-slip material and/or by means of a movable floor anchor (52).

## Revendications

1. Système (2) de positionnement d'une pluralité de composants de véhicule (4, 6, 8, 60) les uns par rapport aux autres sur un sol (10) en préparation d'un assemblage des composants de véhicule (4, 6, 8, 60), comprenant :
- une pluralité de supports (22) pour recevoir chacun un composant de véhicule (4, 6, 8, 60),
- une pluralité de tables de positionnement (24, 26), avec une partie inférieure (30) et une partie supérieure (32), la partie inférieure (30) pouvant être fixée au sol (10), et la partie supérieure (32) étant configurée pour recevoir un support (22),
- un dispositif de localisation (18) avec au moins une base (14) et une pluralité d'unités mobiles (16) mobiles par rapport à l'au moins une base (14),
- au moins un dispositif de transport (28), et
- au moins une unité de commande de position (20),
dans lequel au moins un sous-ensemble des tables de positionnement (24, 26) est configuré pour déplacer sa partie supérieure (32) respective le long d'au moins deux axes de mouvement (38, 40, 42) par rapport à la partie inférieure (30) respective afin de positionner un support (22) situé sur celle-ci, dans lequel l'au moins un dispositif de transport (28) est configuré pour amener les supports (22) d'une position externe à une table de positionnement (24, 26) et les poser sur la partie supérieure (32),
dans lequel le dispositif de localisation (18) est configuré pour déterminer les positions des unités mobiles (16) respectives par rapport à l'au moins une base (14), et
dans lequel les unités mobiles (16) sont disposées sur les parties supérieures (32) des tables de positionnement (24, 26) et/ou les composants de véhicule (4, 6, 8, 60), dans lequel le dispositif de localisation (18) et les tables de positionnement (24, 26) sont couplés à l'au moins une unité de commande de position (20), et dans lequel l'au moins une unité de commande de position (20) est configurée pour commander un mouvement de la partie supérieure (32) respective vers une position cible prédéterminée au-dessus du sol (10); dans lequel le support (22) est configuré pour porter le composant de véhicule (4, 6, 8, 60) et ainsi se tenir sur le sol (10) ou une autre surface ;
dans lequel le support (22) présente respectivement une face inférieure de support et une face supérieure de support ;
dans lequel la face inférieure de support est configurée pour placer le support (22) sur le sol (10) ou sur une pluralité de tables de positionnement (24, 26) ; dans lequel la face supérieure de support est adaptée au composant de véhicule (4, 6, 8, 60) et comporte un dispositif séparé, qui y est fixé, pour recevoir et maintenir le composant de véhicule concerné, lequel est individuellement adapté au composant de véhicule (4, 6, 8, 60) ;
dans lequel la pluralité de tables de positionnement (24, 26) sont configurées en tant que tables de positionnement standardisées qui présentent un mécanisme de table de positionnement standardisé ; et
dans lequel la pluralité de tables de positionnement (24) peuvent être placées de manière flexible sur le sol (10).

2. Système (2) selon la revendication 1, dans lequel la partie supérieure (32) comporte un premier moyen de réception (46) configuré de manière complémentaire à un second moyen de réception (50) sur le support (22), et dans lequel les moyens de réception (46, 50) sont configurés pour fixer le support (22) concerné à demeure sur la partie supérieure (32).

3. Système (2) selon la revendication 1 ou 2, dans lequel les tables de positionnement (24, 26) comportent sur la partie inférieure (30) une couche d'appui (34) en un matériau sensiblement incompressible et antidérapant.

4. Système (2) selon l'une des revendications précédentes, dans lequel les tables de positionnement (24, 26) comportent au moins un ancrage au sol (52) qui est déployable à partir de la partie inférieure (30) dans un évidement de forme correspondante dans le sol (10) pour ancrer la table de positionnement (24, 26).

5. Système (2) selon l'une des revendications précédentes, dans lequel les tables de positionnement (24, 26) comportent chacune au moins un moyen de mise en prise (36) pour recevoir et transporter la table de positionnement (24, 26).

6. Système (2) selon l'une des revendications précédentes, dans lequel les tables de positionnement (24, 26) sont configurées pour déplacer la partie supérieure (32) dans trois directions spatiales par rapport à la partie inférieure (30).

7. Système (2) selon l'une des revendications précédentes, dans lequel les tables de positionnement (24, 26) comportent, pour chaque axe de mouvement (38, 40, 42), un mécanisme de réglage (25) qui comprend un actionneur (27), et dans lequel les tables de positionnement (24, 26) comportent chacune une unité de commande (64) qui est couplée à l'actionneur (27) respectif et à l'au moins une unité de commande de position (20) et qui commande les actionneurs (27) pour déplacer la partie supérieure (32).

8. Système (2) selon la revendication 7, dans lequel les actionneurs (27) sont des actionneurs électriques (27), et dans lequel les tables de positionnement (24, 26) comportent un accumulateur d'énergie électrique (62) et/ou un câble de connexion pouvant être relié à un raccordement côté sol ou à un câble d'alimentation.

9. Système (2) selon l'une des revendications précédentes, dans lequel l'au moins une unité de commande de position (20) est configurée pour déterminer des positions finales requises des tables de positionnement (24, 26) à partir de positions relatives prédéterminées des composants (4, 6, 8, 60) les uns par rapport aux autres, et pour les transmettre aux tables de positionnement (24, 26).

10. Système (2) selon l'une des revendications précédentes, dans lequel le dispositif de localisation (18) est configuré pour déterminer une position relative d'une unité mobile (16) par rapport à l'au moins une base (14) par triangulation ou trilatération en utilisant des signaux lumineux ou des signaux électromagnétiques.

11. Système (2) selon l'une des revendications précédentes, dans lequel les supports (22) comportent un évidement (56) sur leur face inférieure (58), dans lequel l'au moins un dispositif de transport (28) est configuré pour adopter un état compacté et un état déployé, et dans lequel l'évidement (56) et le dispositif de transport (28) sont dimensionnés de manière complémentaire l'un par rapport à l'autre, de sorte que le dispositif de transport (28), à l'état compacté, peut être rentré dans l'évidement (56) et, à l'état déployé, soulève le support (22) en vue d'un déplacement.

12. Système (2) selon l'une des revendications précédentes, dans lequel une partie des tables de positionnement (24, 26) est immobile afin de placer un premier support (22) en tant que support de référence sur les tables de positionnement (26) immobiles et d'aligner des seconds supports (22) par rapport à celui-ci.

13. Procédé de positionnement d'une pluralité de composants de véhicule (4, 6, 8, 60) les uns par rapport aux autres sur un sol (10) en préparation d'un assemblage des composants de véhicule (4, 6, 8, 60), comprenant les étapes:
- placer (66) une pluralité de tables de positionnement (24, 26) sur un sol (10) à un poste de montage, les tables de positionnement ayant une partie inférieure (30) et une partie supérieure (32), dans lequel la partie inférieure (32) est fixée au sol (10),
- transporter (68) un premier support (22) et au moins un second support (22), un composant de véhicule (4, 6, 8, 60) étant respectivement disposé sur les supports (22), d'une position externe au poste de montage et les poser (70) sur les tables de positionnement (24, 26) au moyen d'au moins un dispositif de transport (28),
- déplacer (72) les parties supérieures (32) d'au moins un sous-ensemble des tables de positionnement (24, 26) le long d'au moins deux axes de mouvement (38, 40, 42) par rapport à la partie inférieure (30) respective afin d'amener un support (22) situé sur celle-ci dans une position cible,
dans lequel au moins lors du déplacement (72) des parties supérieures (32), une détection de position (74) des parties supérieures (32) et/ou des supports (22) est effectuée au moyen d'un dispositif de localisation (18) qui comprend une base (14) et une pluralité d'unités mobiles (16) mobiles par rapport à l'au moins une base (14) ;
dans lequel le support (22) est configuré pour porter le composant de véhicule (4, 6, 8, 60) et ainsi se tenir sur le sol (10) ou une autre surface ;
dans lequel le support (22) présente respectivement une face inférieure de support et une face supérieure de support ;
dans lequel la face inférieure de support est configurée pour placer le support (22) sur le sol (10) ou sur une pluralité de tables de positionnement (24, 26) ; dans lequel la face supérieure de support est adaptée au composant de véhicule (4, 6, 8, 60) et comporte un dispositif séparé, qui y est fixé, pour recevoir et maintenir le composant de véhicule concerné, lequel est individuellement adapté au composant de véhicule (4, 6, 8, 60) ;
dans lequel la pluralité de tables de positionnement (24, 26) sont configurées en tant que tables de positionnement standardisées qui présentent un mécanisme de table de positionnement standardisé ; et
dans lequel la pluralité de tables de positionnement (24) peuvent être placées de manière flexible sur le sol (10).

14. Procédé selon la revendication 13, dans lequel, après la pose (70) des supports (22) sur les tables de positionnement (24, 26), au moins une unité de commande de position (20) détermine (76) les positions réelles de tous les composants de véhicule (4, 6, 8, 60), les compare (78) avec des positions cibles, détermine (80) les mouvements des parties supérieures (32) nécessaires pour atteindre les positions cibles et les transmet (82) aux tables de positionnement (24, 26).

15. Procédé selon la revendication 13 ou 14, dans lequel, après le placement (66), les tables de positionnement (24, 26) sont fixées (84) au sol (10) au moyen d'une couche d'appui (34) en un matériau sensiblement incompressible et antidérapant et/ou au moyen d'un ancrage au sol (52) mobile.
